# EUROPEAN PATENT APPLICATION

(11) **EP 2 746 916 A1**
(43) Date of publication of application: **25.06.2014**
(21) Application number: 13020119.7
(22) Date of filing: 21.10.2013
(51) Int. Cl.: G06F 3/0482

(54) **Menu management methods and systems**

(30) Priority: 20.12.2012 US 201213721524
(71) Applicant: HTC Corporation, Taoyuan County 330 (TW)
(72) Inventor: Coddington, Nicole Alexandra, Bellevue, WA 98005 (US); Chen, Ying-Ju, Taoyuan City 330 (TW); Brinda, David, Bellevue, WA 98005 (US)
(74) Representative: Wimmer, Hubert

(57) **Abstract**

Menu management methods and systems are provided. First, a first trigger is received. In response to the first trigger, a menu of a specific function is displayed. The menu at least includes a base part, and at least one layer surrounding the base part. The base part displays an indicator illustrating a current configuration of the specific function. A first layer among the at least one layer displays a first set of at least one tool set for the specific function. In some embodiments, the menu is dismissed when a second trigger is received.

## Description

### CROSS REFERENCE TO RELATED APPLICATIONS

This Application claims priority of U.S. Provision Application No. 61/417,400, filed on November 26, 2010, the entirety of which is incorporated by reference herein.

### BACKGROUND OF THE INVENTION

### Field of the Invention

The disclosure relates generally to menu management methods and systems, and, more particularly to methods and systems that provide management for menus with layered structures.

### Description of the Related Art

Recently, portable devices, such as handheld devices, have become more and more technically advanced and multifunctional. For example, a handheld device may receive email messages, have an advanced address book management application, allow media playback, and have various other functions. Because of the conveniences of devices with multiple functions, the devices have become necessities of life.

Handheld devices may be provided with input devices for users to control functions thereof. For example, a handheld device may be equipped with a touch-sensitive device for users to perform required operations. Generally, applications or software of the devices will display related interfaces or menus via the touch-sensitive device. Users can slide their fingers on the touch-sensitive device, and perform operations, such as item selection or configuration setting, accordingly.

Conventionally, the menu provided by the applications or software is uniform and static. For example, a menu is always designed as a predefined background with fixed texts. Since the texts on the menu are limited due to the limited size of the menu, no information or notes can be provided via the menu, thus resulting in difficulties in understanding the functions or settings of the menu.

### BRIEF SUMMARY OF THE INVENTION

Menu management methods and systems are provided.

In an embodiment of a menu management method, a first trigger is received. In response to the first trigger, a menu of a specific function is displayed. The menu comprises a base part, and at least one layer surrounding the base part. The base part displays an indicator illustrating a current configuration of the specific function. A first layer among the at least one layer displays a first set of at least one tool set for the specific function.

An embodiment of a menu management system includes a reception unit, a display unit, and a processing unit. The reception unit receives a first trigger. In response to the first trigger, the processing unit displays a menu of a specific function via the display unit. The menu comprises a base part, and at least one layer surrounding the base part. The base part displays an indicator illustrating a current configuration of the specific function. A first layer among the at least one layer displays a first set of at least one tool set for the specific function.

In some embodiments, the first trigger is received via a touch-sensitive display unit, wherein the touch-sensitive display unit comprises a display area used for displaying data and a detection area comprising at least one virtual key, and the first trigger is received by tapping the virtual key within the detection area. In some embodiments, the first trigger is received by using a pen module, wherein the pen module comprises at least one physical button, and when the physical button on the pen module is pressed, a command is transmitted from the pen module to the electronic device to activate the first trigger.

In some embodiments, the menu is displayed by first displaying the base part, displaying the first layer without the at least one tool set, and displaying the first set of the at least one tool set in the first layer one after another.

In some embodiments, the menu further comprises a second layer displaying at least one indicator illustrating a recently used configuration of the specific function. In some embodiments, the menu further comprises a second layer displaying at least one selection item corresponding to the tool set.

In some embodiments, a second set of at least one tool set is displayed in the first layer when the base part is tapped. In some embodiments, at least one selection item corresponding to the tool set is displayed in a second layer when the tool set is tapped.

In some embodiments, the menu is dismissed when a second trigger is received.

Menu management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a menu management system of the invention;

Fig. 2 is a schematic diagram illustrating an embodiment of a display unit of the invention;

Fig. 3 is a schematic diagram illustrating an embodiment of a pen module of the invention;

Fig. 4 is a flowchart of an embodiment of a menu management method of the invention;

Fig. 5 is a schematic diagram illustrating an embodiment of an example of a pen inking menu with a first set of tool sets of the invention;

Figs. 6A∼6G are schematic diagrams illustrating an embodiment of an animation when invoking the pen inking menu of Fig. 5 of the invention;

Fig. 7 is a schematic diagram illustrating an embodiment of an example of a pen inking menu with a second set of tool sets of the invention;

Figs. 8A∼8G are schematic diagrams illustrating an embodiment of an animation when invoking the pen inking menu of Fig. 7 from the pen inking menu of Fig. 5 of the invention;

Figs. 9A, 9B and 9C are schematic diagrams respectively illustrating an embodiment of an example of a pen inking menu with selection items for respective tool sets of the invention;

Figs. 10A∼10F are schematic diagrams illustrating an embodiment of an animation when invoking the pen inking menu of Fig. 5 from the pen inking menu of Fig. 7 of the invention; and

Figs. 11A∼11G are schematic diagrams illustrating an embodiment of an animation when dismissing the pen inking menu of Fig. 5 of the invention.

### DETAILED DESCRIPTION OF THE INVENTION

Menu management methods and systems are provided.

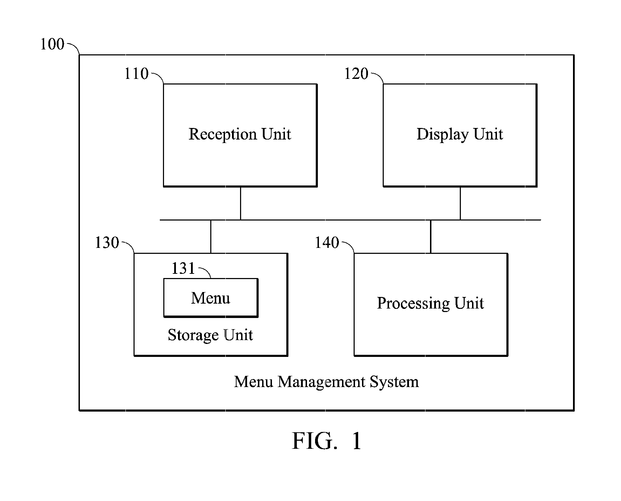

Fig. 1 is a schematic diagram illustrating an embodiment of a menu management system of the invention. The menu management system 100 can be used in an electronic device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

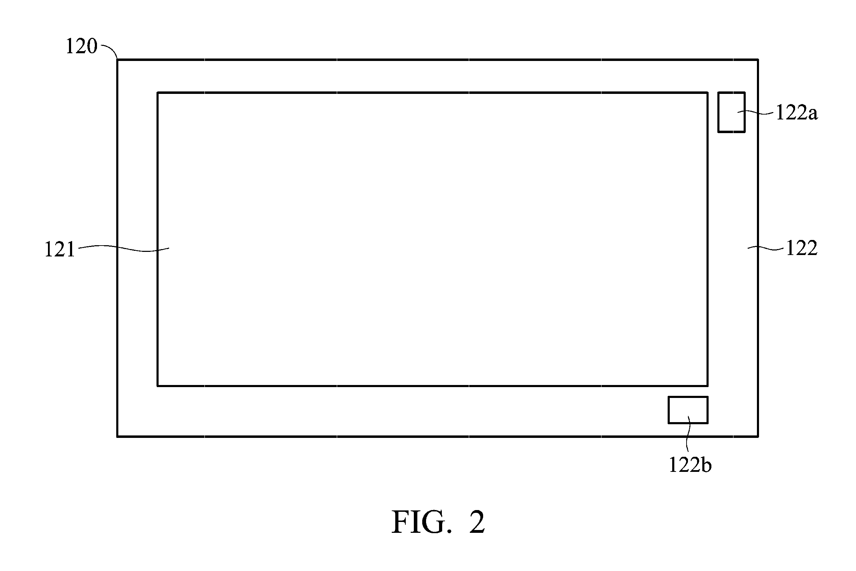

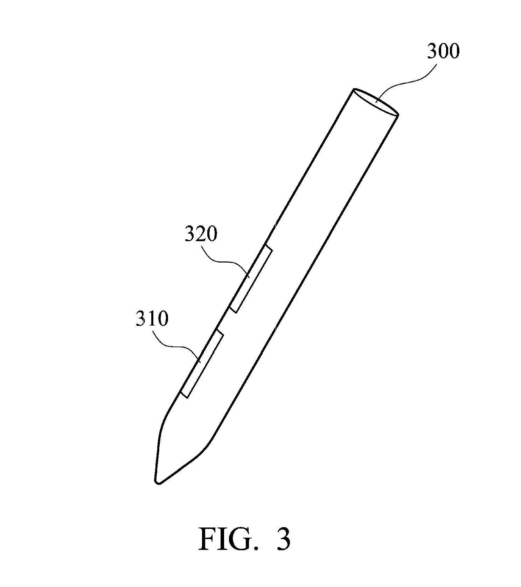

The menu management system 100 comprises a reception unit 110, a display unit 120, a storage unit 130, and a processing unit 140. The reception unit 110 can be used to receive triggers, which are used to invoke or dismiss a menu for a specific function. It is understood that, in some embodiments, the display unit 120 may be integrated with a touch-sensitive device to form a touch-sensitive display unit. The touch-sensitive device has a touch-sensitive surface comprising sensors in at least one dimension to detect contact and movement of an input tool (object), such as a stylus or a finger near or on the touch-sensitive surface. It is understood that, in some embodiments, the display unit 120 may have a display area 121 and a detection area 122, as shown in Fig. 2. The display area 121 can display related data, such as user interfaces, menus, and others. The detection area 122 may have at least one virtual key (122a and 122b) used for invoking the menu. In some embodiments, the display unit 120 may be the reception unit 110, wherein a trigger is received to invoke the menu when the virtual key 122a or 122b within the detection area 122 is tapped. It is noted, in some embodiments, the virtual key 122a may be valid when the electronic device is in a portrait mode, and the virtual key 122b may be valid when the electronic device is in a landscape mode. Additionally, the reception unit 110 may be a wireless transmission interface used to receive a command from a pen module 300, as shown in Fig. 3. As shown in Fig. 3, the pen module has at least one physical button (310 and 320). When any or a specific physical button on the pen module 300 is pressed, a command is transmitted from the pen module 300 to the reception unit 110 of the electronic device to activate the trigger, thus to invoke the menu. It is understood that, in some embodiments, the electronic device can detect whether the pen module 300 is in proximity to the electronic device or the display unit 120 of the electronic device. The physical button will be inactivated when the pen module 300 is not in proximity to the electronic device or the display unit 120 of the electronic device, and the physical button is active and/or glowing when the pen module 300 is in proximity to the electronic device or the display unit 120 of the electronic device. The storage unit 130 may be a built-in memory, or an external memory card, which stores related data, such as the menu 131 for the specific function, and provides data to the display unit 120 for display. The processing unit 140 can perform the menu management method of the present invention, which will be discussed further in the following paragraphs.

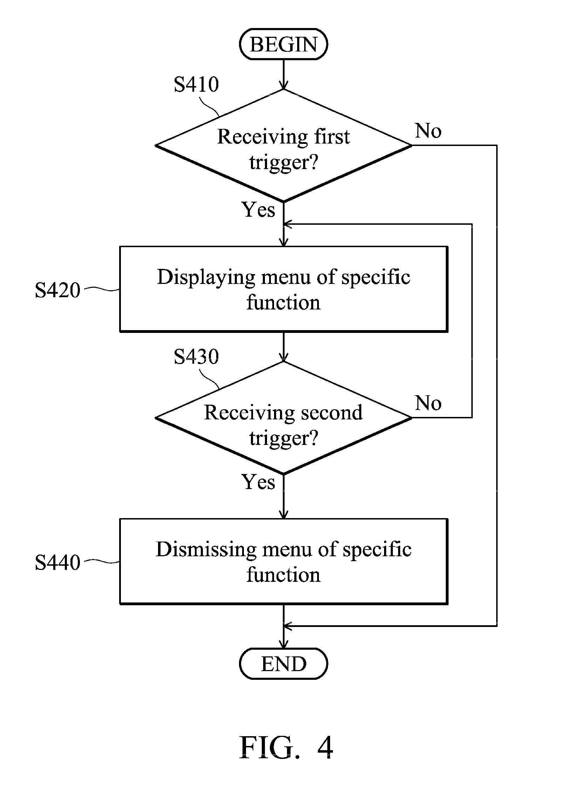

Fig. 4 is a flowchart of an embodiment of a menu management method of the invention. The menu management method can be used for an electronic device, such as a PDA, a smart phone, a mobile phone, an MID, a laptop computer, a car computer, a digital camera, a multi-media player or a game device.

In step S410, it is determined whether a first trigger is received or not. It is understood that, in some embodiments, the first trigger is received via a touch-sensitive display unit. As described, in some embodiments, the touch-sensitive display unit may comprise a display area used for displaying data and a detection area comprising at least one virtual key. The first trigger can be received by tapping the virtual key within the detection area. In some embodiments, the first trigger is received by using a pen module. As described, in some embodiments, the pen module can comprise at least one physical button. When the physical button on the pen module is pressed, a command is transmitted from the pen module to the electronic device to activate the first trigger. If no trigger is received (No in step S410), the procedure is terminated. If a first trigger is received (Yes in step S410), in step S420, a menu of a specific function is displayed.

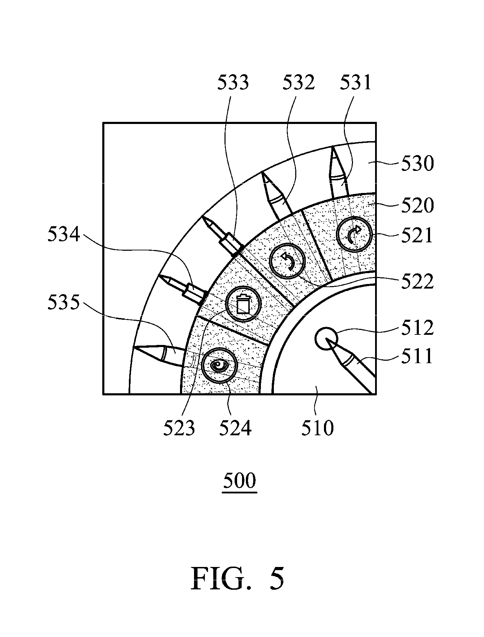

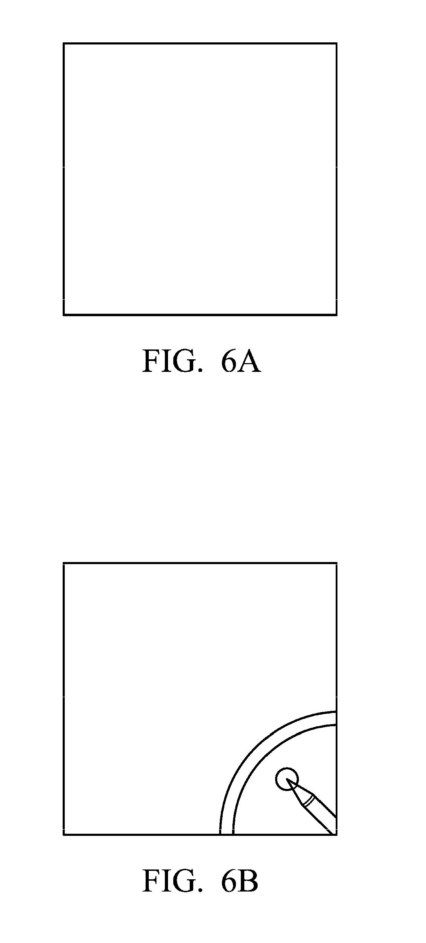

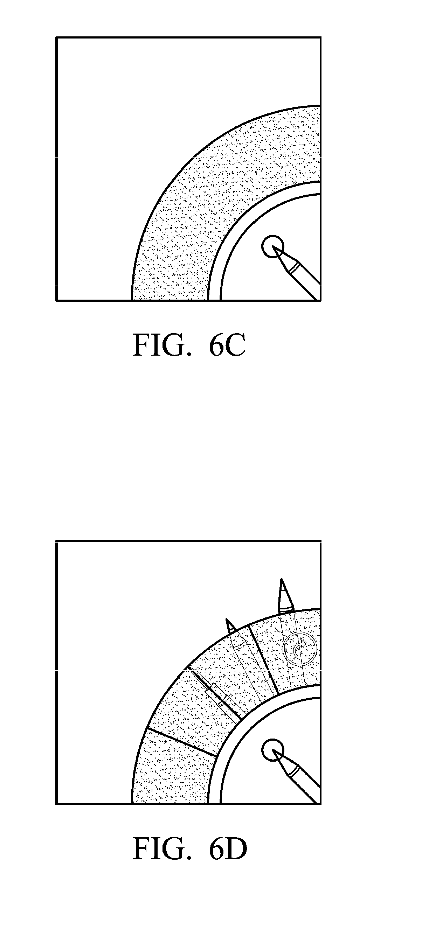

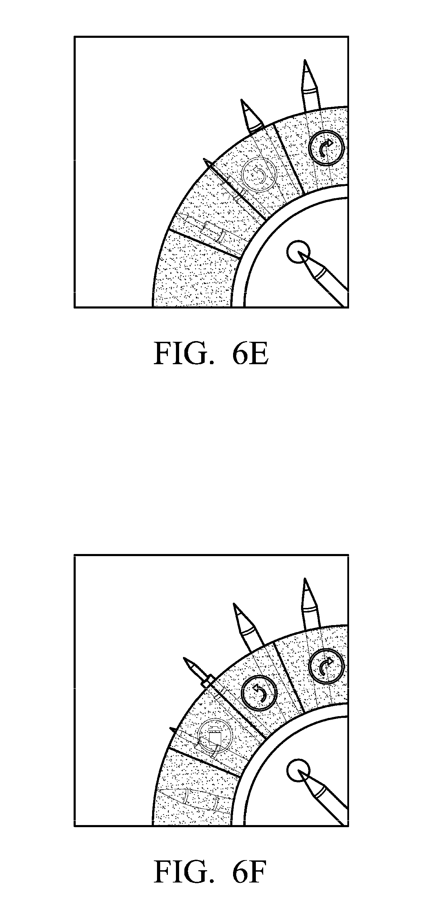

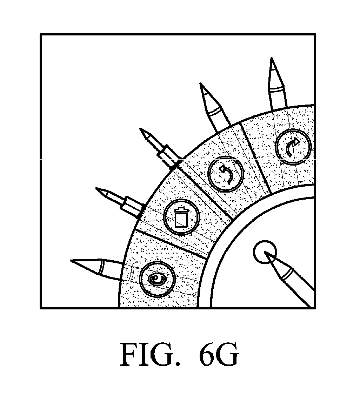

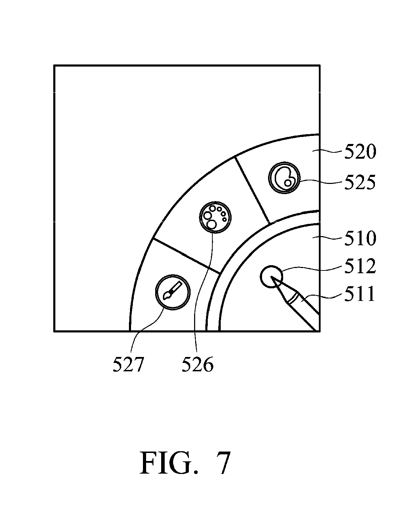

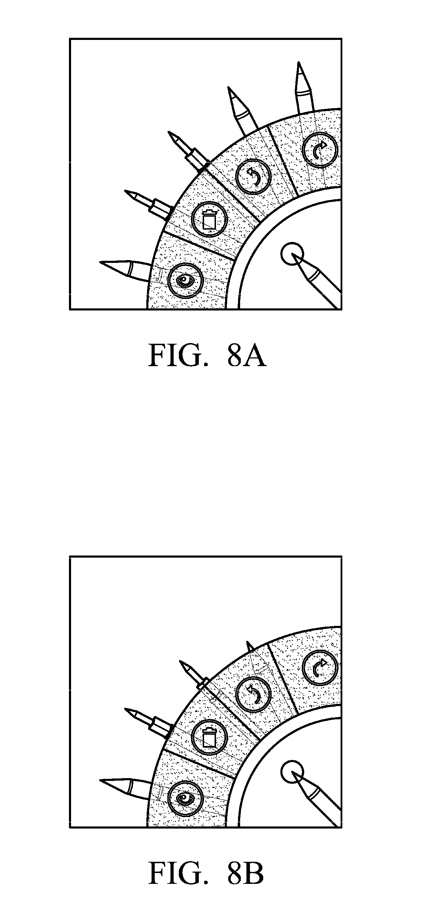

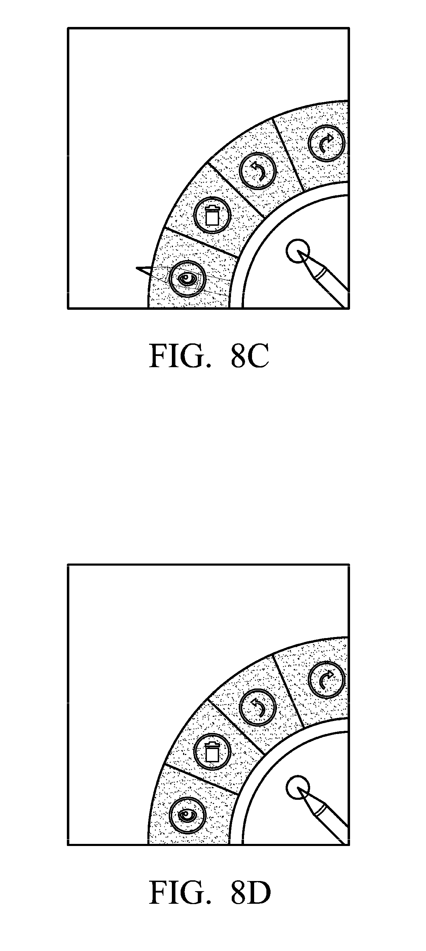

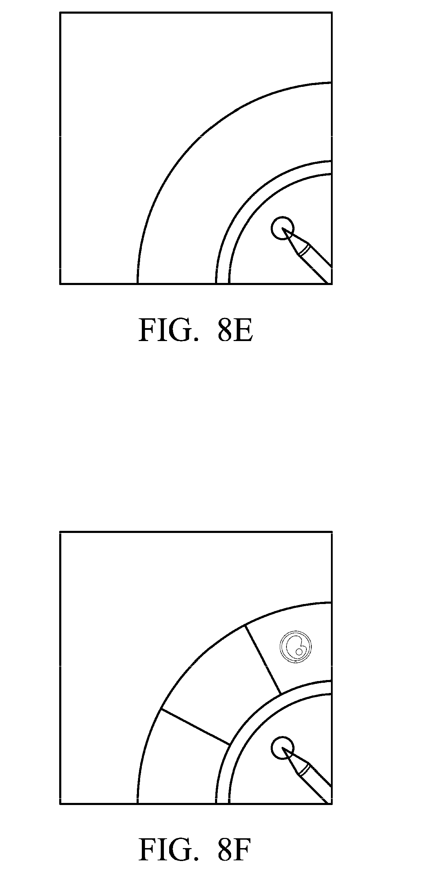

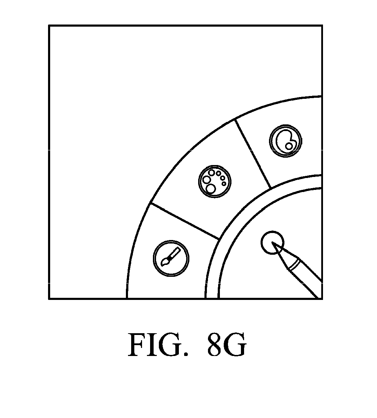

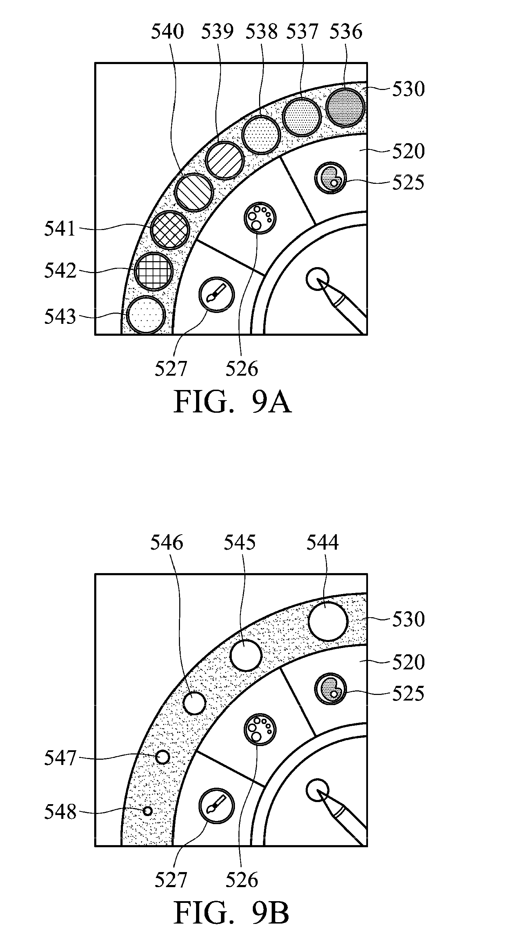

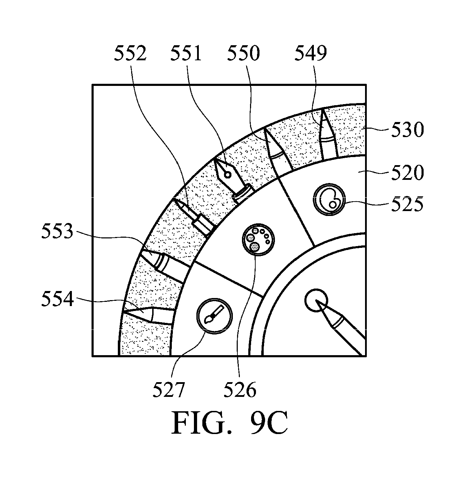

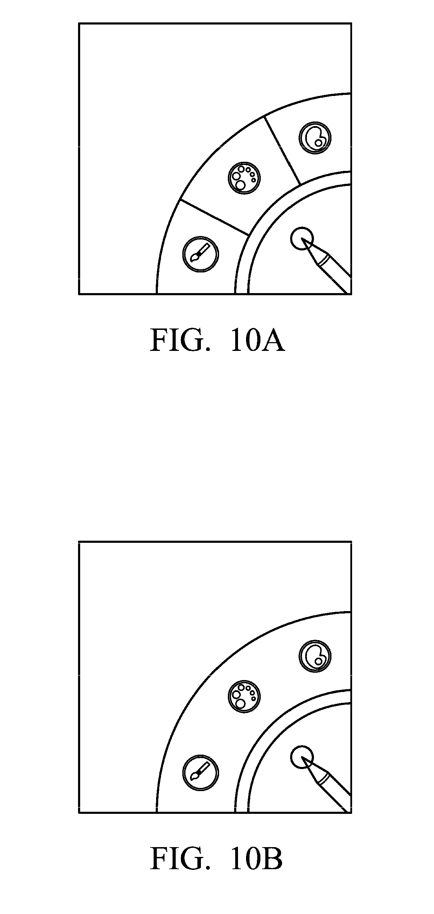

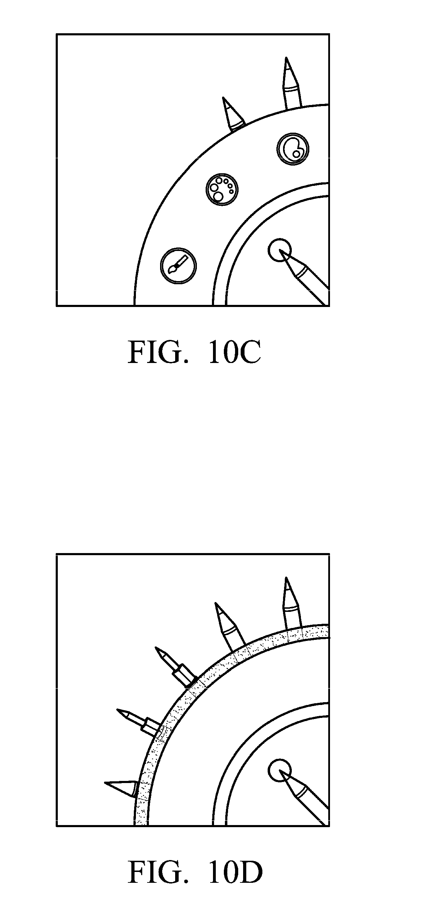

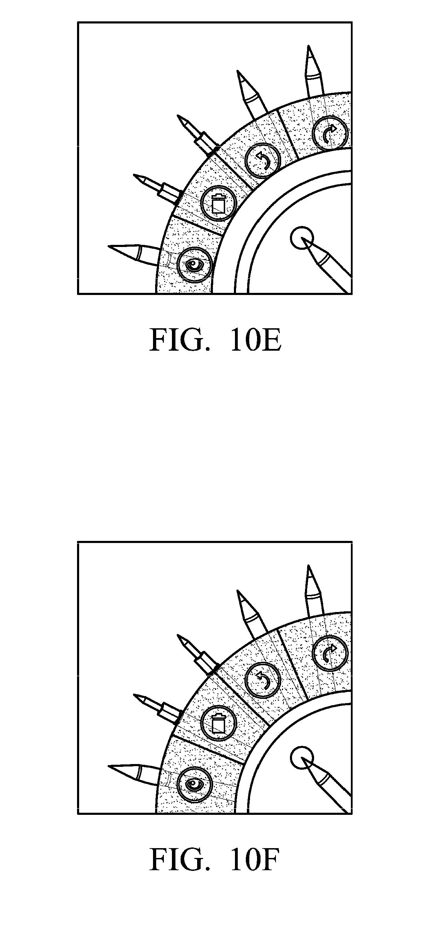

Fig. 5 is a schematic diagram illustrating an embodiment of an example of a pen inking menu with a first set of tool sets of the invention. As shown in Fig. 5, the menu 500 comprises a base part 510, and at least one layer (520 and 530) surrounding the base part 510. It is understood that, in the embodiment, the base part 510 may be a quarter of a round shape, and the at least one layer (520 and 530) is arranged around the base part 510. In the embodiment, the menu 500 may be located at a corner of the display unit. It is noted that, the above shape, arrangement, and location of the menu are examples of the embodiment, and the present invention is not limited thereto. As shown in Fig. 5, the base part 510 can display an indicator 511 illustrating a current configuration of the specific function (pen inking). The first layer 520 can display a first set of at least one tool set, such as Redo 521, Undo 522, Clear All 523, and Show/Hide All 524 for the specific function. It is noted that, if there is no history for Undo, the tool set should be inactivated, and if there is no history for Redo, the tool set should be inactivated. It is understood that, in some embodiments, a predefined number of steps, such 20 steps can be recorded for the history of the Undo/Redo tool set. When Clear All 523 is tapped, all ink marks on the display unit are cleared. When Show/Hide All 524 is tapped, all ink marks (ink canvas) are turned on/off. The second layer 530 can display at least one indicator, such as indicators 531∼535, respectively illustrating a recently used configuration of the specific function, such as a recently used pen, wherein the oldest one is on the bottom. It is understood that, when a user starts to use the pen, a previously used pen will be automatically saved as the recently used pen. In the embodiment, 5 preset recently used pens can be recorded for users. It is noted that, if there is no preset recently used pen, no record of recently used pen can be displayed. In some embodiments, if the new pen is the same as that of the saved recently used pen, it will not be saved again. When a user selects/changes the tool sets, such as color, size, or stroke type of a pen, the same recently used pen with the currently used one will be inactivated (grey out) to let user know that the pen is currently being used. Additionally, if a user selects one of the recently used pens, the selected recently used pen will be changed to the base part and the other recently used pens will move to let the currently used pen (the selected recently used pen) be moved to the latest recently used pen location. (which means if the recently used pen has #1∼#5, and #1 is the latest, #5 is the oldest, and if a user selects #3 RUP, #3 will be moved to the currently used pen location, #2 will be moved to #3, #1 will be moved to #2 and the currently used pen will be moved to #1). It is understood that, in some embodiments, the menu can be progressively displayed. For example, Figs. 6A∼6G are schematic diagrams illustrating an embodiment of an animation when invoking the pen inking menu of Fig. 5 of the invention. As shown in Figs.6A∼6G, the base part can be first displayed, next, the first layer without the at least one tool set can then be displayed, and next, the first set of the at least one tool set can be displayed in the first layer, one after another. It is noted that, the current configuration of the pen can be visualized as an indicator 511, which is also a button 512 that allows a user to change the function of the pen. When the button 512 is tapped, a pen inking menu with a second set of tool sets can be displayed, as shown in Fig. 7. As shown in Fig. 7, the first layer 520 of the menu 500 displays a second set of tool sets 525, 526 and 527, which respectively correspond to a setting for a color, a stroke size and a pen type for the pen. Similarly, in some embodiments, an animation can be employed to show the progress of invoking the pen inking menu of Fig. 7 from the pen inking menu of Fig. 5, as shown in Fig. 8A∼8G. It is understood that, in some embodiments, at least one selection item corresponding to a tool set in a second layer can be displayed when the tool set is tapped. For example, when the tool set of color 525 is tapped, the selection items (536∼543) corresponding to the tool set of color 525 are displayed in the second layer 530, as shown in Fig. 9A. It is understood that, in some embodiments, there will be few preset colors, and user may still customize the color, in which 8 color options, such as grey (or white), red, orange, yellow, green, blue, purple, black can be provided. When the tool set of the stroke size 526 is tapped, the selection items (544∼548) corresponding to the tool set of the stroke size 526 can be displayed in the second layer 530, as shown in Fig. 9B. It is understood that, in some embodiments, the size is predefined, and there are a total of 5 size options which can be selected. When the tool set of a pen type 527 is tapped, the selection items (549∼554) corresponding to the tool set of the pen type 527 is displayed in the second layer 530, as shown in Fig. 9C. It is understood that, in some embodiments, the pen types are predefined, and six options, such as Paintbrush, Crayon, Marker, Calligraphy, Pencil, and Pen can be selected. It is understood that, when a user taps the base part again, the new setting of a pen will be brought into the indicator displayed in the base part. Similarly, in some embodiments, an animation can be employed to show the progress of invoking the pen inking menu of Fig. 5 from the pen inking menu of Fig. 7, as shown in Fig. 10A∼10F.

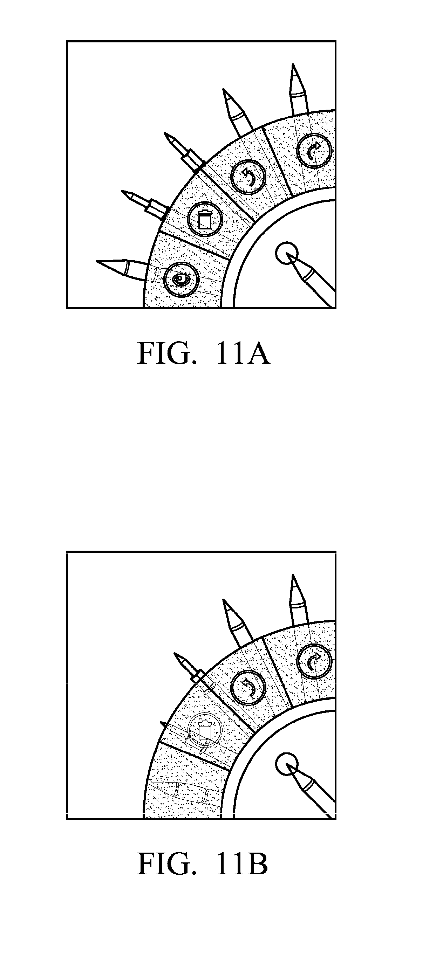

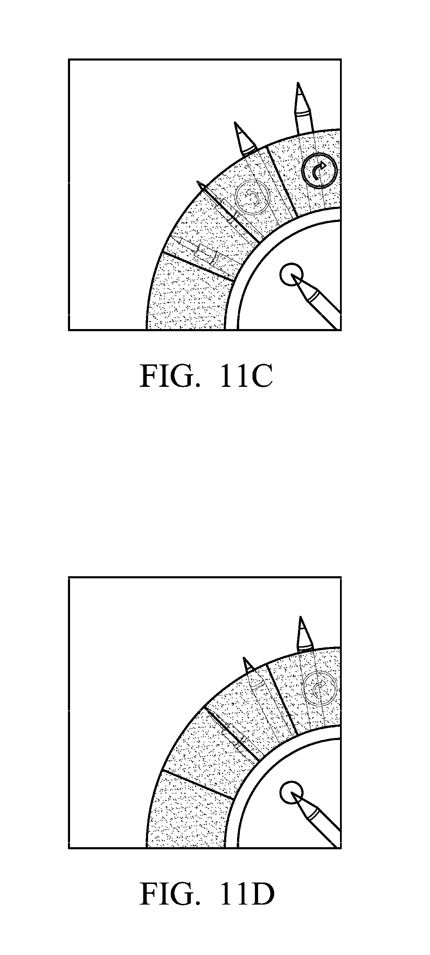

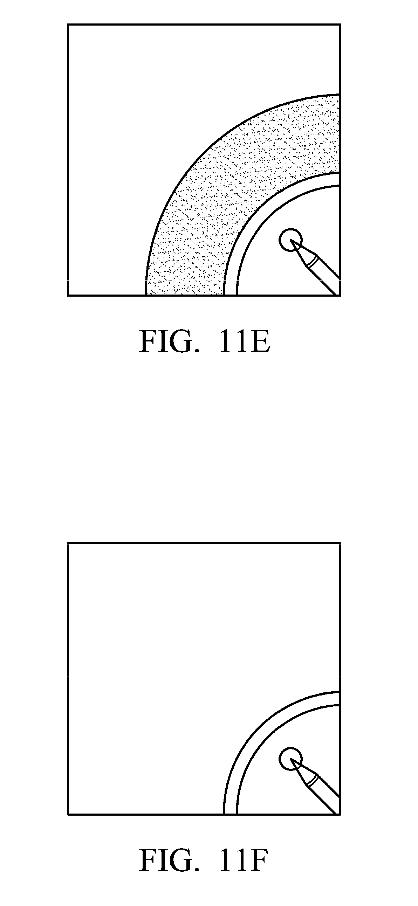

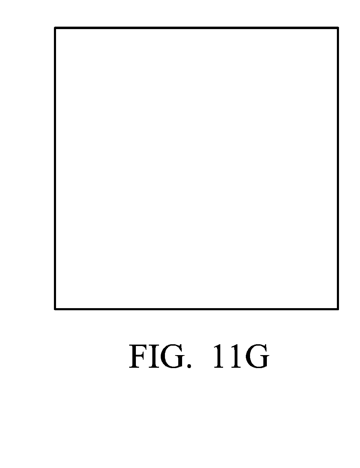

Referring to Fig. 4 again, in step 430, it is determined whether a second trigger is received or not. It is understood that, in some embodiments, the second trigger can be received by detecting that no tap has occured on the virtual key within the detection area of the display unit. In some embodiments, the second trigger can be received by using the pen module. When the physical button on the pen module is pressed, a command is transmitted from the pen module to the electronic device to activate the second trigger. In some embodiments, the second trigger can be received when the time runs out after a predefined duration, wherein no pen is detected by the electronic device. In some embodiments, the second trigger can be received when any of the two first or second set sets is selected. If no trigger is received (No in step S430), the procedure returns to step S420. If a second trigger is received (Yes in step S430), in step S440, the menu of the specific function is dismissed. Similarly, in some embodiments, the menu can be progressively dismissed, as shown in Figs. 11A∼11G.

Therefore, the menu management methods and systems of the invention can provide layer-structured menus and related managements thereof, and further provide related information or notes via the menu, thus helping users to understand and operate functions or settings of the menus.

Menu management methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A computer-implemented menu management method for use in an electronic device, comprising:
receiving a first trigger; and
in response to the first trigger, displaying a menu of a specific function, wherein the menu comprises a base part, and at least one layer surrounding the base part, in which the base part displays an indicator illustrating a current configuration of the specific function, and a first layer displays a first set of at least one tool set for the specific function.

2. The method of claim 1, wherein the first trigger is received via a touch-sensitive display unit, wherein the touch-sensitive display unit comprises a display area used for displaying data and a detection area comprising at least one virtual key, and the first trigger is received by tapping the virtual key within the detection area.

3. The method of claim 1, wherein the first trigger is received by using a pen module, wherein the pen module comprises at least one physical button, and when the physical button on the pen module is pressed, a command is transmitted from the pen module to the electronic device to activate the first trigger.

4. The method of claim 1, wherein the menu is displayed by first displaying the base part, displaying the first layer without the at least one tool set, and displaying the first set of the at least one tool set in the first layer one after another.

5. The method of claim 1, wherein the menu further comprises a second layer displaying at least one indicator illustrating a recently used configuration of the specific function.

6. The method claim 1, wherein the menu further comprises a second layer displaying at least one selection item corresponding to the tool set.

7. The method claim 1, wherein the menu is located at a corner of a display unit, the base part is a quarter of a round shape, and the at least one layer is arranged around the base part.

8. The method claim 1, further comprising displaying a second set of at least one tool set in the first layer when the base part is tapped.

9. The method claim 8, further comprising displaying at least one selection item corresponding to the tool set in a second layer when the tool set is tapped.

10. The method of claim 8, wherein the specific function is a pen inking function, and the second set of the at least one tool set comprises a setting for a color, a stroke size or a pen type for a pen.

11. The method of claim 1, further comprising:
receiving a second trigger; and
in response to the second trigger, dismissing the menu.

12. The method of claim 11, wherein the second trigger is received by detecting that no tap has occured on a virtual key within a detection area of a touch-sensitive display unit, wherein the touch-sensitive display unit comprises a display area used for displaying data and the detection area comprising the virtual key.

13. The method of claim 11, wherein the second trigger is received by using a pen module, wherein the pen module comprises at least one physical button, and when the physical button on the pen module is pressed, a command is transmitted from the pen module to the electronic device to activate the second trigger.

14. The method of claim 11, wherein the second trigger is received when time runs out after a predefined duration and no pen is detected by the electronic device.

15. The method of claim 11, wherein the second trigger is received when the first set of the at least one tool set is selected.

16. A menu management system for use in an electronic device, comprising:
a reception unit receiving a first trigger;
a display unit; and
a processing unit, in response to the first trigger, displaying a menu of a specific function via the display unit, wherein the menu comprises a base part, and at least one layer surrounding the base part, in which the base part displays an indicator illustrating a current configuration of the specific function, and a first layer displays a first set of at least one tool set for the specific function.

17. A machine-readable storage medium comprising a computer program, which, when executed, causes a device to perform a menu management method, comprising:
receiving a first trigger; and
in response to the first trigger, displaying a menu of a specific function, wherein the menu comprises a base part, and at least one layer surrounding the base part, in which the base part displays an indicator illustrating a current configuration of the specific function, and a first layer displays a first set of at least one tool set for the specific function.
